# EUROPÄISCHE PATENTSCHRIFT

(11) **EP 1 188 198 B1**
(45) Veröffentlichungstag und Bekanntmachung des Hinweises auf die Patenterteilung: **30.07.2003**
(21) Anmeldenummer: 00949068.1
(22) Anmeldetag: 25.05.2000
(51) Int. Cl.: H01M 8/02, C25B 9/00

(54) **MEMBRAN-ELEKTRODEN-EINHEIT MIT INTEGRIERTEM DICHTRAND**
MEMBRANE ELECTRODE UNIT COMPRISING AN INTEGRATED SEALING EDGE
UNITE MEMBRANE-ELECTRODES A BORD D'ETANCHEITE INTEGRE

(30) Priorität: 28.05.1999 DE 19926027
(43) Veröffentlichungstag der Anmeldung: 20.03.2002
(73) Patentinhaber: Heliocentris Energiesysteme GmbH, 12489 Berlin (DE)
(72) Erfinder: BRONOLD, Matthias, D-12207 Berlin (DE); MAI, Frank, D-15913 Ressen-Zaue (DE)
(74) Vertreter: Specht, Volker
(86) Internationale Anmeldenummer: DE0001743
(87) Internationale Veröffentlichungsnummer: WO00074161

(56) Entgegenhaltungen:
- GB-A- 2 323 700
- PATENT ABSTRACTS OF JAPAN vol. 1996, no. 10, 31. Oktober 1996 (1996-10-31) & JP 08 148169 A (TOKYO GAS CO LTD), 7. Juni 1996 (1996-06-07)
- PATENT ABSTRACTS OF JAPAN vol. 1998, no. 03, 27. Februar 1998 (1998-02-27) & JP 09 289028 A (TANAKA KIKINZOKU KOGYO KK), 4. November 1997 (1997-11-04)

## Beschreibung

Die Erfindung betrifft eine Membran-Elektroden-Einheit mit integriertem Dichtrand für elektrochemische Zellen, die aus einer Polymerelektrolytmembran und diese beidseitig bedeckenden Elektroden besteht, wobei der Dichtrand den Kantenbereich der Polymerelektrolytbahn ummantelt.

Aus der DE 197 03 214 ist bereits eine Membran-Elektroden-Einheit der eingangs erwähnten Art bekannt, bei der der Dichtrand die Elektroden in dem betreffenden Randbereich durchdringt und an der Polymerelektrolytmembran haftet. Als Dichtmittel wird ein thermoplastischer oder aushärtbarer Kunststoff verwendet, der in der flüssigen Phase durch Kapillarwirkung über die Poren in den Elektroden zur Polymerelektrolytmembran gelangen und an dieser haften soll, um so eine sichere Abdichtung zu bewirken. Es hat sich jedoch herausgestellt, daß die bekannten ionenleitenden Polymerelektrolytmembranen, die an das Polymergerüst angehängte ionische Gruppen aufweisen, eine sehr geringe Oberflächenenergie haben. Sie lassen sich daher nur schwer an andere Materialien binden, so daß die Haft- und Dichtwirkung eingeschränkt ist.

Der Erfindung liegt daher die Aufgabe zugrunde, den Dichtrand für eine Membran-Elektroden-Einheit so auszubilden, daß eine hohe Dichtwirkung an der Polymerelektrolytmembran und an den Durchbrüchen für die Medienführung erreicht wird und gleichzeitig die Handhabung der Membran-Elektroden-Einheit bei der Montage erleichtert wird.

Erfindungsgemäß wird die Aufgabe bei einer Membran-Elekroden-Einheit gemäß dem Oberbegriff des Anspruchs 1 in der Weise gelöst, daß der Dichtrand aus einer beidseitig aufgetragenen Schmelzkleberschicht besteht, die in einem über die Umfangskanten der Polymerelektrolytbahn überstehenden einstückigen Teilbereich Durchbrüche zur Montage und/oder zur Medienführung in einem Brennstoffzellenstapel bildet und die aus einem Schmelzkleber mit ionischen oder stark polaren Gruppen zur Erzeugung einer Oberflächenwechselwirkung mit den ionischen Gruppen der Polymerelektrolytmembran und damit einer guten Haftwirkung besteht.

Es wird somit eine Membran-Elektroden-Einheit mit einem verhältnismäßig stabilen, an dem Membranmaterial gut haftenden Dichtrand zur Verfügung gestellt, der aufgrund seiner versteifenden Wirkung auch eine einfache Handhabung bei der Montage gewährleistet und zudem eine einfache und gut abgedichtete Ausbildung der Durchbrüche für die Montage und Medienführung bei einem Brennstoffzellenstapel ermöglicht. Wegen des nur am äußeren Randbereich der Membran-Elektroden-Einheit angebrachten Dichtrandes ist der Bedarf an Membran- und Elektrodenmaterial relativ gering. Die gute Haftung und Abdichtung wird zum einen dadurch erreicht, daß der nach außen überstehenden Teilbereich eine einstückige Einheit bildet und zum anderen die an dem Kohlenwasserstoffgerüst des Schmelzklebers in im wesentlichen regelmäßigen Abständen vorhandenen polaren Gruppen eine starke polare Wechselwirkung mit dem Säuregruppen enthaltenden Membranmaterial und damit einen starken Klebeeffekt erzeugen.

Weitere Merkmale und zweckmäßige Weiterbildungen bzw. Vorteile der Erfindung ergeben sich aus den Unteransprüchen bzw. der nachfolgenden Beschreibung einer lediglich beispielhaft wiedergegebenen Ausführungsform der Erfindung.

Das Ausführungsbeispiel wird anhand der Zeichnung näher erläutert. Es zeigen:
- Fig. 1: eine Schnittansicht einer mit einem erfindungsgemäß ausgebildeten Dichtrand versehenen Membran-Elektroden-Einheit;
- Fig. 2: eine Draufsicht der Membran-Elektroden-Einheit nach Fig. 1; und
- Fig. 3: eine Schnittansicht einer mit beidseitig angeordneten Gasverteilern und Stromableitern komplettierten Membran-Elektroden-Einheit in einer Brennstoffzelle.

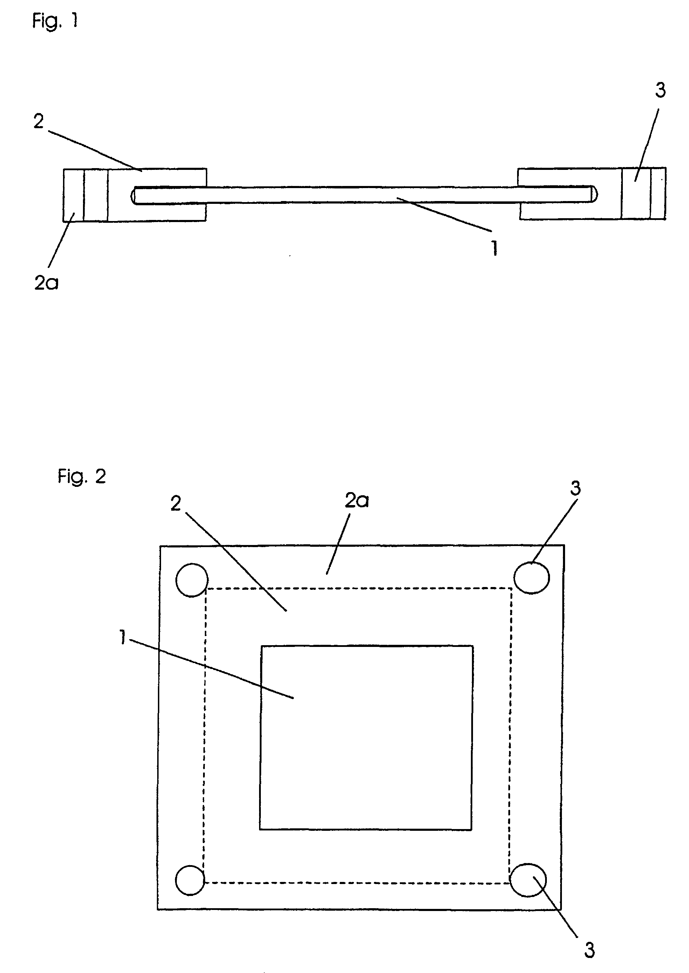

Gemäß den Figuren 1 bis 3 ist die Membran-Elektroden-Einheit 1 am Umfang mit einem speziellen Schmelzkleber zur Ausbildung eines Montagerandes oder Dichtrandes 2 mit abdichtender Wirkung in einer Brennstoffzelle oder einem Brennstoffzellenstapel versehen. Der Dichtrand deckt den Randbereich der Membran-Elektroden-Einheit 1 beidseitig ab und ist über deren umlaufende Kante hinaus zu einem einstückigen Randbereich 2a verlängert, in dem sich Durchbrüche 3 zur Medienführung und/oder für die Montage bei einem Brennstoffzellenstapel befinden. Die Ausbildung des Dichtrandes erfolgt unter Wärme- und Druckeinwirkung auf das auf den Rand der Membran-Elektroden-Einheit 1 aufgelegte Schmelzklebermaterial, das sich während der schmelzflüssigen Phase in dem überstehenden Bereich miteinander und ansonsten mit der Membran-Elektroden-Einheit 1 fest verbindet.

Damit steht eine Membran-Elektroden-Einheit zur Verfügung, die einen verhältnismäßig steifen Rand mit abdichtender Wirkung aufweist. Die Membran-Elektroden-Einheit 1 kann dadurch einfach gehandhabt und montiert werden. Der Verbrauch an Membran- und Elektrodenmaterial ist gering, da der Schmelzkleber nur den äußersten Rand der Membran-Elektroden-Einheit abdeckt und die erforderlich Handhabungs- und Montagebreite dadurch erreicht wird, daß sich der Schmelzkleber über die Außenkante des Membran- und Elektrodenmaterials hinaus erstreckt.

Eine wichtige Voraussetzung für die Verbindung des Dichtrandes 2 mit der Membran-Elektroden-Einheit 1 ist die Bereitstellung eines geeigneten Schmelzklebers, da dieser normalerweise aufgrund der geringen Oberflächenenergie der Polymerelektrolytmembran schlecht haftet. Es wird daher ein Schmelzkleber mit ionischen oder stark polaren Gruppen eingesetzt, die in Wechselwirkung mit den ionischen Gruppen des Membranmaterials eine gute Haftung gewährleisten. In der vorliegenden Ausführungsform wird als Schmelzklebstoff ein Copolymer aus Ethylen und Methacrylsäure verwendet, das sich aufgrund der Carbonsäuregruppen hervorragend mit der Polymerelektrolytmembran verbindet.

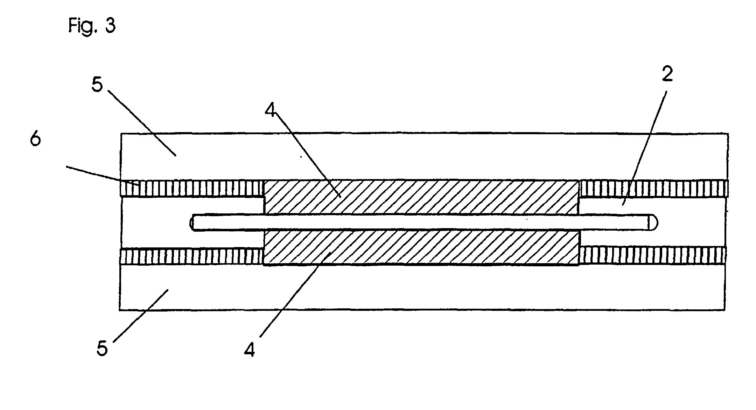

In Fig. 3 ist eine komplette Brennstoffzelleneinheit unter Verwendung einer mit dem Dichtrand 2 versehenen Membran-Elektroden-Einheit 1 dargestellt. Auf beiden Seiten der Membran-Elektroden-Einheit 1 sind Gasverteiler 4 aus porösem Kohlenstoff sowie Stromableiter 5 (oder bipolare Platten) angeordnet. In dem verbleibenden Zwischenraum zwischen den Stromableiter 5 und dem Dichtrand 2 befindet sich hier jeweils eine zusätzliche Dichtung 6.

## Patentansprüche

1. Membran-Elektroden-Einheit mit integriertem Dichtrand für elektrochemische Zellen, die aus einer Polymerelektrolytmembran und diese beidseitig bedeckenden Elektroden besteht, wobei der Dichtrand den Kantenbereich der Polymerelektrolytbahn ummantelt, **dadurch gekennzeichnet, daß** der Dichtrand (2) aus einer beidseitig aufgebrachten Schmelzkleberschicht besteht, die in einem über die Umfangskanten der Polymerelektrolytbahn überstehenden einstückigen Teilbereich (2a) Durchbrüche (3) zur Montage und/oder zur Medienführung in einem Brennstoffzellenstapel bildet und die aus einem Schmelzkleber mit ionischen oder stark polaren Gruppen zur Erzeugung einer Oberflächenwechselwirkung mit den ionischen Gruppen der Polymerelektrolytmembran und damit einer hohen Haftwirkung besteht.

2. Membran-Elektroden-Einheit nach Anspruch 1, **dadurch gekennzeichnet, daß** zur Bildung einer kompletten Zelle der aktive Bereich der Membran-Elektroden-Einheit (1) beidseitig mit einem Gasverteiler (4) abgedeckt ist, und über die gesamte Einheit jeweils eine bipolare Platte oder ein Stromableiter (5) gelegt ist, wobei die bipolare Platte bzw. der Stromableiter mindestens auf einer Seite unmittelbar mit dem Dichtrand (2) verklebt ist.

3. Membran-Elektroden-Einheit nach Anspruch 2, **dadurch gekennzeichnet, daß** zwischen dem Dichtrand (2) und dem Stromableiter (5) eine zusätzliche Dichtung (6) vorgesehen ist.

4. Membran-Elektroden-Einheit nach Anspruch 1, **dadurch gekennzeichnet, daß** der Schmelzkleber ein aus einem Monomer und Carbonsäure oder deren Salzen oder deren polaren Derivaten gebildetes Copolymer ist.

5. Membran-Elektroden-Einheit nach Anspruch 4, **dadurch gekennzeichnet, daß** der Schmelzkleber für den Dichtrand (2) ein Copolymer aus Ethylen und Metacrylsäure ist.

6. Membran-Elektroden-Einheit nach Anspruch 4, **dadurch gekennzeichnet, daß** der Schmelzkleber ein Copolymer aus Ethylen und Vinylacetat ist.

7. Membran-Elektroden-Einheit nach Anspruch 4, **dadurch gekennzeichnet, daß** der Schmelzkleber in im wesentlichen regelmäßigen Abständen in einem Polymergerüst Carbonsäureestherbindungen enthält.

8. Membran-Elektroden-Einheit nach Anspruch 4 bis 7, **dadurch gekennzeichnet, daß** der Schmelzkleber mit weiteren Komponenten wie organischen Säuren oder anderen polaren Säurederivaten, z. B. Säureanhydride oder Esther, copolymerisiert ist.

## Claims

1. A membrane electrode unit with an integrated sealing rim for electrochemical cells consisting of a polymer electrolyte membrane and electrodes that cover it on both sides, the sealing rim encompassing the edge area of the polymer electrolyte membrane, **characterized in that** the sealing rim (2) consists of hot melt adhesive layers applied on both sides that form openings (3) for assembly and/or for conducting media in a one-piece partial section (2a) protruding beyond the peripheral edges of the polymer electrolyte membrane in a fuel cell stack and that consist of a hot melt adhesive with ionic or strongly polar groups for generating surface interaction with the ionic groups of the polymer electrolyte membrane, thereby ensuring a good adhesive effect.

2. The membrane electrode unit according to claim 1, **characterized in that** the active area of the membrane electrode unit 1 is covered on both sides by a gas distributor (4) to form a complete cell, and that a bipolar plate or power arrester (5) is placed across the entire unit, and that said bipolar plate or power arrester is directly glued to the sealing rim (2) on at least one side.

3. The membrane electrode unit according to claim 2, **characterized in that** an additional seal (6) is provided between the sealing rim (2) and the power arrester (5).

4. The membrane electrode unit according to claim 1, **characterized in that** the hot melt adhesive is a copolymer formed from a monomer and carboxylic acid or the salts or polar derivatives thereof.

5. The membrane electrode unit according to claim 4, **characterized in that** the hot melt adhesive used for the sealing rim (2) is a copolymer formed from ethylene and metacrylic acid.

6. The membrane electrode unit according to claim 4, **characterized in that** the hot melt adhesive used for the sealing rim (2) is a copolymer formed from ethylene and vinyl acetate.

7. The membrane electrode unit according to claim 4, **characterized in that** the hot melt adhesive contains carbonic ester compounds at generally regular intervals in a polymer backbone.

8. The membrane electrode unit according to claims 4 through 7, **characterized in that** the hot melt adhesive is copolymerized with other components such as organic acids or other polar acid derivatives, e.g. acid anhydrides or esters.

## Revendications

1. Unité membrane-électrode comportant un bord d'étanchement intégré pour des cellules électrochimiques, constituée par une membrane électrolyte en polymère et par des électrodes recouvrant celle-ci des deux côtés, le bord d'étanchement enveloppant la zone d'arête de la bande électrolyte en polymère, **caractérisée en ce que** le bord d'étanchement (2) est constitué par une couche de colle fusible déposée des deux côtés, laquelle forme, dans une zone partielle (23a) d'un seul tenant dépassant au-delà des arêtes périphériques de la bande électrolyte en polymère, des traversées (3) ménagées pour le montage et/ou l'amenée de fluides dans un empilement de cellules à combustible, et laquelle est constituée d'une colle fusible présentant des groupes ioniques ou fortement polaires pour établir une interaction superficielle avec les groupes ioniques de la membrane électrolyte en polymère et ainsi un effet adhésif important.

2. Unité membrane-électrode selon la revendication 1, **caractérisée en ce que** pour former une cellule complète, la zone active de l'unité membrane-électrode (1) est recouverte des deux côtés par un distributeur de gaz (4), et une plaque bipolaire respective ou une dérivation de courant électrique (5) est posée sur toute l'unité, la plaque bipolaire ou la dérivation de courant électrique étant collée au moins sur un côté immédiatement sur le bord d'étanchement (2).

3. Unité membrane-électrode selon la revendication 2, **caractérisée en ce qu'**un joint supplémentaire (6) est prévu entre le bord d'étanchement (2) et la dérivation de courant électrique (5).

4. Unité membrane-électrode selon la revendication 1, **caractérisée en ce que** la colle fusible est un copolymère formé à partir d'un monomère et d'acide carboxylique ou par ses sels ou par ses dérivés polaires.

5. Unité membrane-électrode selon la revendication 4, **caractérisée en ce que** la colle fusible pour le bord d'étanchement (2) est un copolymère d'éthylène et d'acide méthacrylique.

6. Unité membrane-électrode selon la revendication 4, **caractérisée en ce que** la colle fusible est un copolymère d'éthylène et d'acétate de vinyle.

7. Unité membrane-électrode selon la revendication 4, **caractérisée en ce que** la colle fusible comprend des composés ester d'acides carboxyliques à des distances sensiblement régulières dans une structure en polymère.

8. Unité membrane-électrode selon l'une des revendications 4 à 7, **caractérisée en ce que** la colle fusible est copolymérisée avec d'autres composantes, telles que des acides organiques ou d'autres dérivés d'acide polaires, par exemple des anhydrides d'acide ou des esters.
